Europäisches Patentamt

European Patent Office

Office européen des brevets

(19)

(11) Veröffentlichungsnummer: **0 066 921**
**B1**

(12) # EUROPÄISCHE PATENTSCHRIFT

(45) Veröffentlichungstag der Patentschrift:
21.08.85

(51) Int. Cl.⁴: **B 01 D 29/14**

(21) Anmeldenummer: **82200624.3**

(22) Anmeldetag: **24.05.82**

(54) **Filterelement.**

(30) Priorität: **01.06.81 CH 3548/81**
**04.11.81 CH 7045/81**

(43) Veröffentlichungstag der Anmeldung:
**15.12.82 Patentblatt 82/50**

(45) Bekanntmachung des Hinweises auf die Patenterteilung:
**21.08.85 Patentblatt 85/34**

(84) Benannte Vertragsstaaten:
**AT BE CH DE FR GB IT LI LU NL SE**

(56) Entgegenhaltungen:
**DE - A - 1 611 119**
**DE - A - 2 625 416**
**DE - B - 1 141 980**

(73) Patentinhaber: **DrM, Dr. Müller AG, Alte
Landstrasse 421, CH-8708 Männedorf ZH (CH)**

(72) Erfinder: **Müller, Hans, Dr. Ing., Im Allmendli,
CH-8703 Erlenbach (CH)**

(74) Vertreter: **Herrmann, Peter, Bauernhalde 9,
CH-8708 Männedorf ZH (CH)**

## Beschreibung

Die Erfindung betrifft ein Filterelement aus Kunststoff zum Einbau in einen Druckfilterbehälter, bestehend aus einem Stützkörper, über welchen ein Filtergewebe gespannt ist.

Ein Filterelement dieser Art ist aus der DE-B-2 114 226 bekannt. Die darin verwendeten Filterschläuche sind mit verschiedenen Stützkörpern im Innern versehen.

Es ist auch eine rückspülbare Filterpatrone bekannt, welche mit einem perforierten zentralen Abflußrohr versehen ist, das seinerseits von einem sternförmigen Stützkörper umgeben ist (DE-B-1 141 980).

Auch sind zur Abstützung im Innern von Filterschläuchen spiralförmige Distanzelemente bekannt. Diese Elemente können einfach oder mehrfach vorkommen (DE-A-2 625 416).

Es ist auch ein Kerzenfilter bekannt (DE-A-1 611 119), welches aus einem flexiblen zylindrischen Mantel besteht, der mit möglichst vielen Öffnungen versehen ist. Dieser Mantel bildet ein Netz, welches beispielsweise mit Glaswolle als Stütz- und Filtermittel versehen ist.

Die bekannten Filterelemente mit Stützkörpern haben eine Verbesserung der Filtrationseigenschaften gebracht. Durch den Einbau von Stützkörpern komplizierter Geometrie treten jedoch Schwierigkeiten während der Reinigung beim Rückspülen der Filterelemente auf. Die Konstruktion der Einsätze und der Filterelemente ist auch aufwendiger geworden und führte zu einer Verteuerung des gesamten Filters.

Aufgabe der Erfindung ist es, ein Filterelement zu schaffen, das in seiner Konstruktion einfach, stabil und leicht zu reinigen und wirtschaftlich herzustellen ist.

Diese Aufgabe wird erfindungsgemäß durch das in Anspruch 1 gekennzeichnete Filterelement gelöst, dessen Stützkörper aus einem Bündel von Rohren mit kreisförmigem Querschnitt und Öffnungen besteht, welches um ein Zentralrohr mit geschlossener Mantelfläche angeordnet ist.

Bei gleichem Durchmesser aller Rohre ergibt sich im Querschnitt die dichteste Packung durch Anordnung von 6 Rohren um das Zentralrohr herum. Es können aber auch unterschiedliche Durchmesser von Zentralrohr und Stützrohren zur Anwendung kommen. In der Regel ist die geschlossene Mantelfläche des Zentralrohres die vorgezogene Ausführungsform. Die das Zentralrohr umgebenden Stützrohre weisen Öffnungen an den Längsseiten als besonders vorteilhaft auf. Dabei können die Öffnungen rund oder eckig, quadratisch, rechteckig oder mehreckig ausgebildet sein. Es können aber auch Rohre mit einer geschlossenen Oberfläche das Zentralrohr umgeben. Als besonders geeignetes Material haben sich Rohre aus Kunststoff erwiesen. Die Auswahl richtet sich weitgehend nach den chemischen Eigenschaften der Suspension die filtriert werden soll. Auch Metallrohre sind geeignet, aus wirtschaftlichen Gründen jedoch sind Kunststoffrohre vorzuziehen.

Die Erfindung soll anhand einer Zeichnung näher beschrieben werden. Es zeigt schematisch

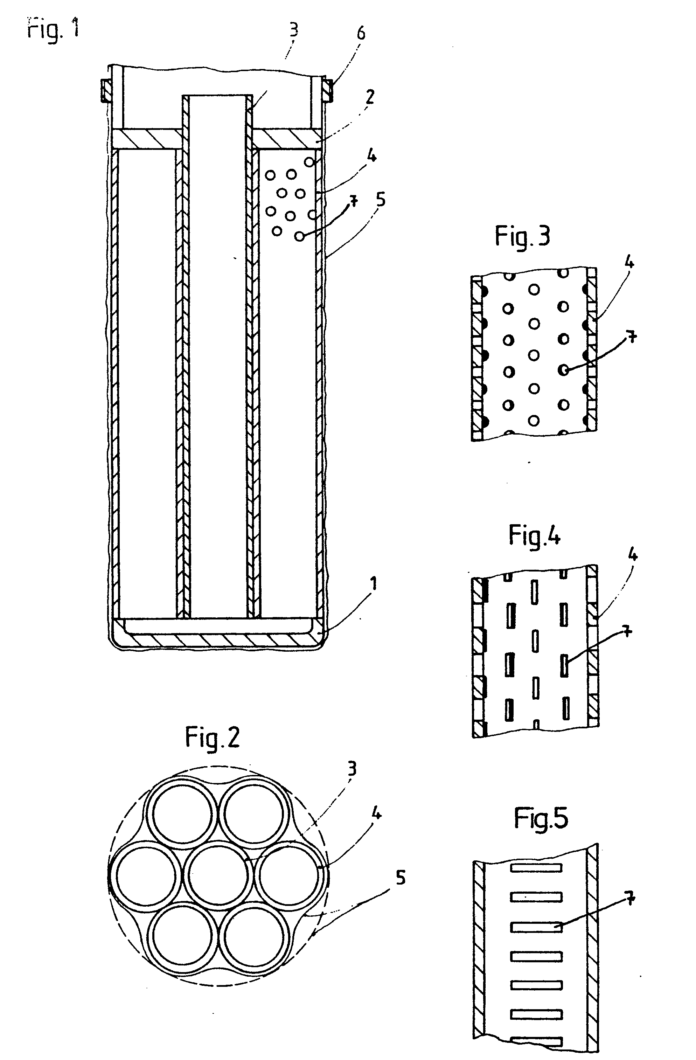

Fig. 1 einen Längsschnitt durch das Filterelement,

Fig. 2 einen Querschnitt durch das Filterelement,

Fig. 3, 4 und 5 verschiedene Rohrbohrungen.

Das Filterelement besteht aus einem Boden 1 und einem Deckel 2. Um ein Zentralrohr 3 sind Stützrohre 4 in dichtester Packung angeordnet. Das Zentralrohr 3 weist eine geschlossene Rohrfläche auf. Die Stützrohre 4 können teilweise aus perforierten Rohren bestehen. Über das Rohrbündel ist ein Filtergewebe 5 derart gespannt, daß dieses während der Filtration von außen nach innen eine wellenförmige Oberfläche bildet und im Zustand der Rückspülung einen runden Querschnitt aufweist. Das Filterelement kann mit einem Verschluß 6 in der nicht gezeigten Tragplatte eines Filterkessels befestigt werden. Die obere Öffnung der Rohre 4 kann durch den Deckel 2 verschlossen oder einen Zwischenraum zwischen Deckel und oberen Rand aufweisen.

Eine besonders vorteilhafte Ausgestaltung der Rohröffnungen sind waagerechte Schlitze, die auf einfache Weise durch Einspannen des Filterelementes auf einer Drehbank hergestellt werden können. Dabei entstehen gleichmäßige waagerechte Öffnungen, deren Abstand und Durchmesser nach Wunsch eingestellt werden können. Schlitze mit einem Winkel von 120° zur Achse haben sich dabei als besonders geeignet erwiesen.

Die Verwendung von Rohren als Stützelemente für ein Filtergewebe hat den Vorteil, daß auf einfache Weise das Gewebe abgestützt und das Filtrat in den Zwischenräumen ablaufen kann. Es tritt in den unteren Teil des Zentralrohres ein und verläßt das Rohr durch seine obere Öffnung in den Filtraraum des Filterkessels. Der Filtratablauf wird durch Perforierung der Stützrohre wesentlich verbessert.

## Patentansprüche

1. Filterelement aus Kunststoff zum Einbau in einen Druckfilterbehälter, bestehend aus einem Stützkörper, über welchen ein Filtergewebe (5) gespannt ist, dadurch gekennzeichnet, daß der Stützkörper aus einem Bündel von Rohren (4) mit kreisförmigem Querschnitt und Öffnungen besteht, welches um ein Zentralrohr (3) mit geschlossener Mantelfläche angeordnet ist.

2. Filterelement nach Anspruch 1, dadurch gekennzeichnet, daß sechs Rohre (4) vom gleichen Durchmesser um das Zentralrohr (3) angeordnet sind.

3. Filterelement nach den Ansprüchen 1 und 2, dadurch gekennzeichnet, daß das Zentralrohr (3) und die Rohre (4) gleichen Durchmesser aufweisen.

4. Filterelement nach einem der Ansprüche 1—3, dadurch gekennzeichnet, daß die Öffnungen (7) der Rohre (4) kreisförmig ausgebildet sind.

5. Filterelement nach einem der Ansprüche 1—3, dadurch gekennzeichnet, daß die Öffnungen (7) der Rohre (4) rechteckig ausgebildet sind.

6. Filterelement nach einem der Ansprüche 1—3, dadurch gekennzeichnet, daß die Öffnungen (7) aus vertikal angeordneten Schlitzen bestehen.

7. Filterelement nach einem der Ansprüche 1—3, dadurch gekennzeichnet, daß die Öffnungen (7) aus waagerecht angeordneten Schlitzen bestehen.

8. Filterelement nach Anspruch 7, dadurch gekennzeichnet, daß die Schlitze mit der Achse des Stützrohres einen Winkel von 120° bilden.

## Claims

1. Filter element of synthetic material, for mounting in a pressure filter container including a support body across which a filter web (5) is laid, wherein the support body comprising a bundle of tubes (4) with a circular diameter and with openings (7) which are disposed about a central tube (3) having a closed surface.

2. Filter element according to claim 1, wherein six tubes (4) of equal diameter are disposed about the central tube (3).

3. Filter element according to the claims 1 and 2, wherein the central tube (3) and the tubes (4) are of the same diameter.

4. Filter element according to one of the claims 1—3, wherein the openings (7) of the tubes (4) are circular.

5. Filter element according to one of the claims 1—3, wherein the openings (7) of the tubes (4) are rectangular.

6. Filter element according to one of the claims 1—3, wherein the openings (7) comprise vertically disposed slits.

7. Filter element according to one of the claims 1—3, wherein the openings (7) comprise horizontally disposed slits.

8. Filter element according to claim 7, wherein the slits form an angle of 120° with the axis of the support tube.

## Revendications

1. Elément en matière plastique destiné à être monté dans un récipient de filtration sous pression qui comprend un corps de base zur lequel est tendue une toile filtrante (5), caractérisé en ce que le corps de soutien se compose d'un faisceau de tubes (4) d'une forme circulaire percés d'ouvertures qui est disposé autour d'un tube central (3) présentant une surface d'enveloppe fermée.

2. Elément filtrant selon la revendication 1, caractérisé en ce que six tubes (4) de même diamètre sont disposés autour du tube central (3).

3. Elément filtrant selon les revendications 1 et 2, caractérisé en ce que le tube central (3) et les tubes (4) présentent des diamètres identiques.

4. Elément filtrant selon l'une des revendications 1 à 3, caractérisé en ce que les ouvertures (7) des tubes (4) ont une forme circulaire.

5. Elément filtrant selon l'une des revendications 1 à 3, caractérisé en ce que les ouvertures (7) des tubes (4) ont une forme rectangulaire.

6. Elément filtrant selon l'une des revendications 1 à 3, caractérisé en ce que les ouvertures (7) sont constituées par des fentes orientées verticalement.

7. Elément filtrant selon l'une des revendications 1 à 3, caractérisé en ce que les ouvertures (7) sont constituées par des fentes orientées horizontalement.

8. Elément filtrant selon la revendication 7, caractérisé en ce que les fentes forment avec l'axe du tube de soutient un angle de 120°.

Fig. 1

Fig. 3

Fig.4

Fig.2

Fig.5